# EUROPEAN PATENT SPECIFICATION

(11) **EP 1 146 190 B1**
(45) Date of publication and mention of the grant of the patent: **04.05.2005**
(21) Application number: 00972915.3
(22) Date of filing: 02.11.2000
(51) Int. Cl.: E05F 11/48, B60J 1/17

(54) **WINDOW LIFTING DEVICE FOR MOTOR VEHICLES**
FENSTERHEBEVORRICHTUNG FÜR MOTORFAHRZEUGE
DISPOSITIF DE REMONTEE POUR VITRES D'AUTOMOBILES

(30) Priority: 05.11.1999 ES 9902426
(43) Date of publication of application: 17.10.2001
(73) Proprietor: Daumal Castellon, Melchor, 08013 Barcelona (ES)
(72) Inventor: Daumal Castellon, Melchor, 08013 Barcelona (ES)
(74) Representative: Morgades Manonelles, Juan Antonio
(86) International application number: PCT/ES2000/000419
(87) International publication number: WO 2001/033020

(56) References cited:
- WO-A-99/33680
- ES-A- 8 307 329
- ES-T3- 2 035 714
- US-A- 4 691 475
- US-A- 5 782 038
- US-A- 5 809 695

## Description

The present application for a Patent of invention consists, as indicated in the title, in a "RAISING DEVICE FOR CAR WINDOWS", which novel characteristics of construction, shaping and design fullfill the task for which it has been specifically designed, with a maximum safety and efficiency.

The driving of the car s windows is made commonly by mounting devices placed at the car doors which are driven by an electric motor which operates certain mechanical elements, such as guides and cables, that operate the window of the car door. Said operation leads to the raising or lowering of the window in an automatic way when the user pushes a switch commonly placed at the interior panel of the door or at the car instruments panel.

Said conventional devices have the drawback that their structural configuration is only valid for the door of one of the sides of the car where the device is to be installed. Therefore, the manufacturing of raising devices for windows means the duplicated production of the several elements included, being the ones for the doors of one side and the others for the doors of the other side of the vehicle referred.

The need of manufacturing different elements for adapting the raising device to the geometric needs inherent to the configuration of the vehicle door have a negative influence on the costs of installation and, therefore, on the total costs of the car.

The main object of the present invention is that of providing a window raising device for cars having basically an structural symmetry in order that the components that are included are the same for the doors of both sides of the car and substantially reducing the manufacturing costs.

With a raising device for car windows according to the present invention this object is achieved providing further several advantages which will be apparent forward in this description.

Generally speaking, the device object of the present invention is of the type of those including at least a guide rail provided at both ends with rollers and a glider element capable of running by said guide in grace to a cable which is actuated by a motor, running such cable by the guide with the help of the rollers.

The main feature of the device of the invention rests in the fact that at least the guide rail, the rollers and the cable are symmetrical, in such a way that said elements may be a part of the raising devices for windows at both sides of the car.

In order to that, said symmetry must be estabilished with regard to an axis perpendicular to the guide at its midpoint. In this way, there is obtained an important reduction both of the manufacturing costs (tooling reduction) and of the parts classification, since it does not matter to which side of the car belongs same.

Advantageously, the raising device for car windows of the present invention has also the special feature that the guide incorporates, both at its opposite ends, end-of-run catches formed at the same guide, which serve further as the housing of the terminal of the sheath by the inside of wich circulates the cable.

The advantages and characteristics of the device of the present invention will be clear because of the detailed description of a preferred embodiment of same that will be given from now on as a non limitative example with reference to the acompanying drawings on which:
Figure 1 is a front elevation view of a raising device for car windows according to the present invention.
Figure 2 is a plant view cut off at plane B-B of Figure 3.
Figure 3 is a cross sectional view as per the plane A-A of Figure 2.

The elements included in the attached figures are as follows: (1) guide rail, (2) end of the guide, (3) end of the guide, (4) roller, (5) roller, (6) lateral crevice, (7) lateral crevice, (8) projection, (9) projection, (10) gliding element, (11) cable, (11a) superior portion of the cable, (11b) lower portion of the cable, (12) glider body, (13) glider body, (14) gliding zone, (15) gliding zone, (16) contact points, (17) motor, (18) motor cover, (19) symmetrical axis, (20) anchoring points to the door, (21) anchoring points to the door, (22) tongues of the glider body , (23) fixation elements, (24) branch of fixation element, (25) branch of fixation element, (26) projection, and (27) projection.

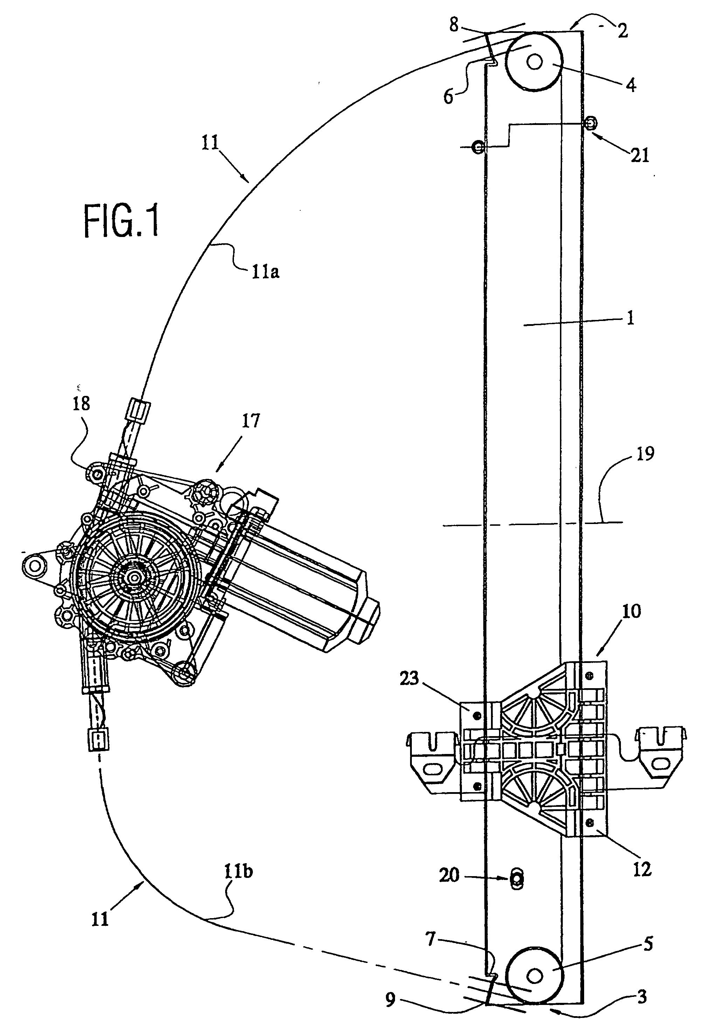

With particular reference to Figure 1 of the attached drawings, a device acording with the present invention is formed with a single guide rail (1) having a great width for increasing the resistance. The guide rail (1) is provided at both ends (2, 3) with rollers (4, 5) and is manufactured in such a way that at said ends (2, 3) exist lateral crevices (6, 7) defining correspoonding projections (8, 9). The crevices (6, 7) work as end-of-course checks for a gliding element (10). The combination of the crevices (6, 7) and projections (8, 9) at the ends (2, 3) of the guide rail (1) also shape a housing for the terminal of the sheath by the interior of which runs the operation cable (11). The crevices (6, 7), the projections (8, 9) and the housing for the guide (1) are shaped in the same embossing operation in the manufacturing process.

The gliding element (10) is formed by two bodies (12, 13) and the assembly defined by both bodies (12, 13) is able of a displacement by the guide rail (1) according to the movement of said cable (11), which runs by the guide (1) with the help of the rollers (4, 5), as indicated above.

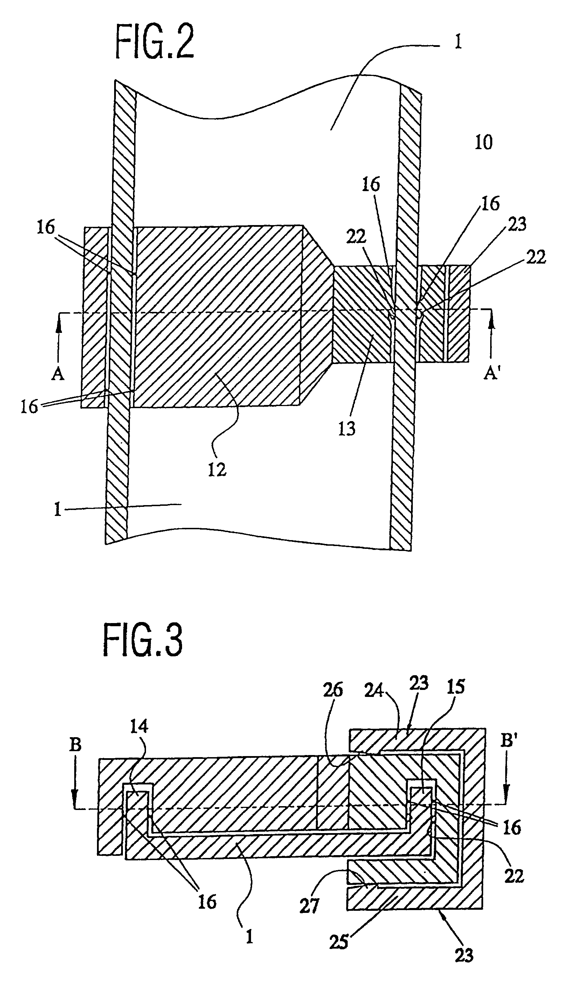

According to Figures 2 and 3, the guide rail (1) features a cross-section in the shape of an U and the gliding element (10) features a complementary shape for fitting in the zones (14, 15) of the guide (1), as shown in Figure 3.

Following with said Figures 2 and 3 of the drawings can be appreciated that the gliding of the element (10) with regard to the guide rail (1) is performed by the zones (14, 15) of same, existing four contact zones which correspond to four contact points (16) at each side of said zones (14, 15) of the guide (1). This brings a great stability in the advancement of the gliding element (10) by the guide rail (1).

The operation of the cable is performed by an electric motor (17) provided with a cover (18).

In the incorporation of the Figures, the guide rail (1) with the rollers (4, 5) as well as the cable and its sheath and the cover (18) of the motor (17) are symmetrical with respect to a symmetry axis (19) illustrated in Figure 1. In this sense, the length of the sheath of the cable at the upper portion (11a) and the lower portion (11b) are the same.

In this way, the raising device for car windows is the same for the left hand door and for the right hand door of the car. It s clear that certain elements such as the anchoring points (20, 21) to the respective doors may be different according to the geometry itself of the door of reference. Thus, there is obtained a reduction in the costs of manufacturing and classification of the parts forming the device of the invention, since it does not matter to which side belong same.

Going back to the Figures 2 and 3, the body (13) of the gliding element (10) is provided with resilient tongues (22) which permit reducing the tolerance values of the body (13) in order to offer a more precise gliding of the element.

The gliding element (10) is provided, in the assembly position, with a fixation element (23) in the shape of an inverted C whose branches (24, 25) pressure embrace said gliding element (10) against the guide (1) with the cooperation of certain projections (26, 27) insuring the position of the whole.

The invention is not considered limited to the preferred incorporation described above, being posible to incorporate the changes and detail modifications deemed convenient, provided that the essence of the invention is not altered nor departing from the inventive scope which is resumed in the following Claims.

## Claims

1. "RAISING DEVICE FOR CAR WINDOWS" including at least one guide rail (1) provided at its ends (2, 3) with rollers (4, 5) and a gliding element (10) able to glide by said guide (1) operated by a cable (11) which runs by same around said rollers (4, 5) in grace to a motor (17) **characterized in that** at least the guide rail (1), the rollers (4, 5) and the cable (11) are symmetrical with respect to an axis (19) arranged perpendicularly at midpoint of the guide (1), in such a way that said elements (1, 4, 5, 11) may be a part of raising devices for car windows of the doors of both sides of a car.

2. "RAISING DEVICE FOR CAR WINDOWS" as per the 1st claim **characterized in that** the guide rail (1) incorporates, at its opposite ends (2, 3) end-of-course checks (6, 7) of the glider (10) formed in the guide (1) in the manufacturing process itself of same, which serve also as a housing for the terminal of the sheath inside of wich runs the cable (11).

## Patentansprüche

1. "HEBEVORRICHTUNG FÜR AUTOFENSTER", bestehend aus mindestens einer Führungsschiene (1), die an ihren Enden (2, 3) mit Rollen (4, 5) und einem Gleitelement (10) versehen ist, das in der Lage ist, auf besagter Führungsschiene (1) zu gleiten, und zwar betätigt durch ein Kabel (11), das an dieser Schiene mithilfe eines Motors (17) über die Rollen (4, 5) geführt wird, **dadurch gekennzeichnet, dass** die mindestens eine Führungsschiene (1) sowie die Rollen (4, 5) und das Kabel (11) symmetrisch in Bezug auf eine Achse (19) angeordnet sind, die senkrecht zum Mittelpunkt der Führungsschiene (1) verläuft, sodass die Elemente (1, 4, 5, 11) Teil einer Hebevorrichtung für Autofenster an den Türen auf beiden Seiten eines Kraftfahrzeugs bilden können.

2. "HEBEVORRICHTUNG FÜR AUTOFENSTER" nach Anspruch 1, **dadurch gekennzeichnet, dass** die Führungsschiene (1) an ihren gegenüberliegenden Enden (2, 3) Endlagenarretierungen (6, 7) für das im Zuge des Produktionsverfahrens an der Führungsschiene (1) ausgeformte Gleitelement (10) aufweist, die gleichzeitig als Gehäuse für die Enden des Schaftes, in welchem das Kabel (11) geführt wird, dienen.

## Revendications

1. « DISPOSITIF D'ÉLÉVATION POUR VITRES DE VOITURE » comprenant au moins un rail guide (1) muni à ses extrémités (2, 3) de rouleaux (4, 5) et d'un élément coulissant (10) capable de coulisser sur ce rail guide (1) et commandé par un câble (11) qui se déplace dans le même sens que les rouleaux (4, 5) grâce à un moteur (17) **caractérisé par le fait qu'**au moins le rail guide (1), les rouleaux (4, 5 ) et le câble (11) sont symétriques par rapport à un axe (19) disposé perpendiculairement au milieu du rail guide (1), de sorte à ce que ces éléments (1, 4, 5, 11) puissent faire partie des dispositifs d'élévation pour vitres de voiture des deux portières de celle-ci.

2. « DISPOSITIF D'ÉLÉVATION POUR VITRES DE VOITURE » conformément à la revendication 1, **caractérisé par le fait que** le rail guide (1) incorpore, à ses extrémités (2, 3), des butoirs de fin de parcours (6, 7) de l'élément coulissant (10), réalisés sur le rail guide (1) lors du propre processus de fabrication de celui-ci, qui servent également de logement à l'extrémité de la gaine dans laquelle se déplace le câble (11).
